Europäisches Patentamt

European Patent Office

Office européen des brevets

(19)

(11) Publication number: **0 084 724**
**A1**

(12) **EUROPEAN PATENT APPLICATION**

(21) Application number: 82306772.3

(22) Date of filing: 17.12.82

(51) Int. Cl.³: **F 16 H 37/08**

(30) Priority: 30.12.81 GB 8139154

(43) Date of publication of application: 03.08.83
Bulletin 83/31

(84) Designated Contracting States: **DE FR GB NL SE**

(71) Applicant: **LEYLAND VEHICLES LIMITED, Lancaster House, Leyland Preston Lancashire (GB).**

(72) Inventor: **Greenwood, Christopher John, 30 Homestead Clayton Brook Bamber Bridge, Preston Lancashire (GB)**

(74) Representative: **Rock, Olaf Colin et al, LRL Patent Trademark and Licensing Dept. Cowley Body Plant, Cowley Oxford OX4 5NL (GB)**

(54) **Vehicle transmission.**

(57) An off-highway vehicle has a continuously-variable-ratio transmission (15) of the rolling traction type. In order to produce forward reverse and geared neutral, an epicyclic gear (12) sums the output of the transmission (10), taken via epicyclic gear (13) which steps the output down, with the input (1) to the transmission. Depending on their relative speeds, the output (14) produces forward, reverse or geared neutral. Epicyclic gear (13) only acts as a step down when its carrier for the planets (13b) is locked. The carrier can be released in order to declutch the transmission. The arrangement offers the advantage of compactness and of a true neutral.

## VEHICLE TRANSMISSION

This invention relates to vehicle transmissions, and especially to vehicle transmissions of the continuously-variable-ratio kind.

The invention provides a transmission system which comprises an input shaft for connection to any engine output shaft, a rolling traction toroidal race continuously-variable-ratio transmission driven by the input shaft, a first simple epicyclic gear comprising a sun gear planetary gears on a carrier and an annulus, for combining drives taken from the input shaft and the output of the continuously-variable-ratio transmission, and a second simple epicyclic gear comprising a sun gear planetary gears on a carrier and an annulus, one part of which can be locked relative to the transmission system casing, and which in connected so as to provide a step up or a step down for one of the drives before they are combined at the first simple epicyclic gear when the said part of the second epicyclic gear is locked, the transmission being declutched when the said part of the epicyclic gear is released.

-2-

A simple epicyclic gear is used to combine the drive of the input with that of the continuously-variable-ratio transmission to produce forward reverse and geared neutral. The engine to which the transmission is connected will have a preferred range of speeds, and the continuously-variable-ratio transmission will also have a preferred range of speeds, and it may therefore be desired to combine them in a ratio which cannot be conveniently provided by a simple epicyclic gear. To permit the use of a simple epicyclic gear for such combination, a second epicyclic gear is used as a step up or step down as appropriate. In accordance with the invention, a part of the second epicyclic gear can be selectively released to declutch the transmission system. This can be done in certain circumstances as a safeguard to protect the transmission and/or engine.

Thus for example, the release could take place when the engine oil pressure falls below a certain value. This will ensure that the transmission system is declutched when the engine is switched off. Otherwise, damage could take place if the vehicle was towed since the engine would be stationary and the transmission would be driven by the wheels, and the continuously-variable-ratio

-3-

transmission could not adjust ratio accordingly since the hydraulic pressure necessary for its operation is derived from the engine.

The release may take place when brake fluid pressure rises above a certain value. Damage could otherwise occur if the brakes were locked, since this could happen in as little as 1/10th second whereas the continuously-variable-ratio transmission could take something in the region of 1/4 or 1/2 second to adjust to geared neutral.

A manual control for releasing the releasable part of the second epicyclic gear may also be provided.

The said releasable part of the second epicyclic gear could be locked by means of a brake band, but is preferably locked by means of a multi-plate clutch.

Preferably, the first epicyclic gear is connected as follows: sun driven by input shaft; carrier driven from output of continuously-variable-ratio transmission via second epicyclic gear; annulus forming output of transmission system. The second epicyclic is preferably connected as follows: sun to output of continuously-variable-ratio

-4-

transmission; carrier capable of being locked; annulus forming output to first epicyclic gear.

A transmission system constructed in accordance with the invention will now be described, by way of example, with reference to the accompanying drawings, in which:

Figure 1 is a schematic view of the transmission system; and

Figure 2 is a schematic view of a continuously-variable-ratio transmission of the rolling traction type which forms a part of the transmission system of Figure 1.

The transmission system is designed for an off-highway vehicle, in which forward and reverse speeds are expected to be similar. The vehicle is powered by a diesel engine.

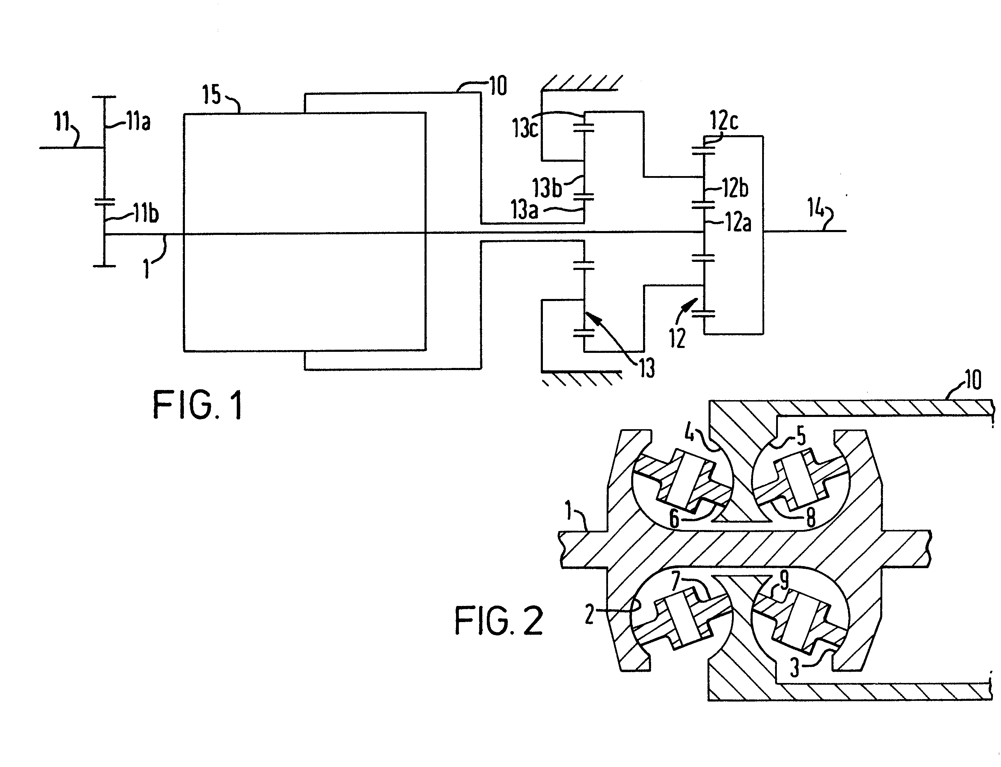

The transmission system includes a continuously-variable-ratio transmission of the rolling traction type. Such transmissions are described, for example, in Paper No 80-C2/DET-59 of the American Society of Mechanical Engineers and the Applicants' Patent Application Nos 81 32125. Referring to Figure 2, the transmission has a shaft 1 bearing two opposed toroidal races 1, 3 and a double-sided

-5-

toroidal race 4, 5 between which rollers 6-9 transmit torque. The output is taken by means of a sleeve 10 coupled to the double-sided race 4, 5. The drawing is schematic in that race 2 can be displaced in an axial direction along shaft 1 (although it rotates with it) in order to alter the end-load pressure that forces the rollers into contact with their races. Also, there are three rollers between each pair of races so only one would be visible in a true section through the transmission. Speed ratio is varied by displacing the rollers in such a way that they steer to different inclinations. The metal surfaces of the races and roller are completely separated by an oil film which transmits torque by the elasto- hydrodynamic phenomenon.

A zero transmission ratio is not possible with the transmission of Figure 2 alone, and so it is combined with another drive obtained from the same input by means of an epcyclic gear. The input shaft 11 connected to the diesel engine rotates at a maximum speed of 2000 rpm. Gears 11a, 11b step this speed up to about 3000 rpm maximum at the shaft 1. The output 10 from the continuously-variable-ratio transmission, indicated by the numeral 15 in Figure 1, rotates faster or slower, depending on the inclination of the rollers.

A first simple epicyclic gear 12 combines a direct input from the shaft 1 with the output of the continuously-variable-ratio transmission 10 which is stepped down by means of a second epicyclic gear 13, the carrier of which can be locked. The final output 14 from the first epicyclic gear rotates in either direction or is stationary, depending on the relative speeds of sleeve 10 and shaft 1.

Shaft 1 is connected to the sun gear 12a of the first epicyclic gear, the stepped down output 10 is connected to the carrier of the planets 12b and the output 14 is taken from the annulus 12c.

The output 10 is connected to the sun 13a of the second epicyclic gear 13, the carrier of the planets 13b is lockable to the transmission system casing, and the output to the first epicyclic gear 12 is taken from the annulus 13c.

The carrier of the planets 13b is lockable by means of a multiplate clutch (not shown) which when locked holds the carrier stationary relative to the transmission system casing. When the clutch is off,

0084724

the carrier can rotate freely, and the output 14 becomes decoupled from the input 1·

The epicyclic gear 13 serves the dual purpose of stepping down the speed of the output sleeve 10 to such a value that a simple epicyclic gear 12 can be used to. combine the output 10 and the input 1 in a desired ratio, while enabling the whole transmission to be declutched when desired. Further the two epicyclic gears 12, 13 are arranged concentrically and thus in a space-saving manner, and in a way which minimises power losses.

The clutch mechanism is arranged to be released when (a) engine oil pressure fails (b) hydraulic brake pressure reaches a certain value and (c) by means of a manual control.

A microprocessor can be used to control the transmission as well as engine speed, as has been proposed before (see for example the ASME paper referred to or British Patent Application No 81 32 125). However the transmission for the off-highway vehicle described is simpler than in the examples referred to above, in that the transmission has only one operating regime. A simpler control system is therefore possible.

In British Patent Application No 81 32 125 two rams are employed for generating the pressures which control the transmission (ie for controlling the inclination of the rollers 6-9 and the end-loading pressures between the races 2, 3). The pressures are generated in those rams under the control of a microprocessor. In the simpler system referred to, the pressure in each ram is generated by pressure in a respective foot pedal in the vehicle. Thus, the driver presses one pedal to control forward torque and the other to control reverse torque. A separate control is necessary for engine speed. The reverse pedal can be applied when the vehicle is travelling forwards to apply braking torque, but this could in certain circumstances transfer energy from the vehicle to the engine at such a high rate as to risk damaging the vehicle engine.

## CLAIMS

1. A transmission system which comprises an input shaft for connection to an engine output shaft, a rolling traction toroidal race continuously-variable-ratio transmission driven by the input shaft, a first simple epicyclic gear comprising a sun gear planetary gears on a carrier and an annulus, for combining drives taken from the input shaft and the output of the continuously-variable-ratio transmission, and a second simple epicyclic gear comprising a sun gear planetary gears on a carrier and an annulus, one part of which can be locked relative to the transmission system casing, and which is connected so as to provide a step up or a step down for one of the drives before they are combined at the first simple epicyclic gear when the said part of the second epicyclic gear is locked, the transmission being declutched when the said part of the epicyclic gear is released.

2. A transmission system as claimed in Claim 1, in which the locking of the said part of the second epicyclic gear is such that it is released when the oil pressure of an engine connected to the transmission system input falls below a certain value.

3. A transmission system as claimed in Claim 1 or Claim 2, in which the locking of the said part of the second epicyclic gear is such that it is released when the pressure of brake fluid in a vehicle equipped with the transmission system rises above a certain value.

4. A transmission system as claimed in any one of Claims 1 to 3, in which a multiplate clutch is provided for locking the said part of the second epicyclic gear.

5. A transmission system as claimed in any one of Claims 1 to 4, in which the second epicyclic gear provides a step up or step down for the output of the continuously-variable-ratio transmission.

6. A transmission substantially as hereinbefore described with reference to, and as shown in, the accompanying drawings.

7. A vehicle having a transmission as claimed in any one of Claims 1 to 6.

FIG. 1

FIG. 2

1/1

00847724

## DOCUMENTS CONSIDERED TO BE RELEVANT

EP 82306772.3

| Category | Citation of document with indication, where appropriate, of relevant passages | Relevant to claim | CLASSIFICATION OF THE APPLICATION (Int. Cl. ³) |
|---|---|---|---|
| A | FR - A - 1 021 198 (RODRIGUEZ) <br> * Totality * <br> -- | | F 16 H 37/08 |
| A | GB - A - 957 145 (GENERAL MOTORS) <br> * Totality * <br> -- | | |
| A | GB - A - 1 199 145 (ENGLISH ELECTRIC) <br> * Totality * <br> -- | | |
| A | US - A - 1 056 292 (NETTENSTROM) <br> * Totality * <br> -- | | |
| A | US - A - 3 277 745 (HARNED et al.) <br> * Totality * <br> -- | | TECHNICAL FIELDS SEARCHED (Int. Cl. ³) |
| A | US - A - 3 406 597 (DE BRIE PERRY et al.) <br> * Totality * <br> -- | | F 16 H 15/00 <br> F 16 H 37/00 |
| A | US - A - 3 410 146 (NORDEEN) <br> * Totality * <br> -- | | |
| A | US - A - 3 820 416 (KRAUS) <br> * Totality * <br> -- | | |

The present search report has been drawn up for all claims

| Place of search | Date of completion of the search | Examiner |
|---|---|---|
| VIENNA | 09-03-1983 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US – A – 2 086 491 (DODGE)<br><br>* Totality *<br><br>———— | . | |
| | | | TECHNICAL FIELDS SEARCHED (Int. Cl. 3) |

EPO Form 1503.2   06.78